## Europäisches Patentamt

## European Patent Office

## Office européen des brevets

(19)

(11) Numéro de publication: **0 093 035 B1**

(12) **FASCICULE DE BREVET EUROPEEN**

(45) Date de publication du fascicule du brevet:
**27.08.86**

(51) Int. Cl.⁴: **G 02 F 1/137**

(21) Numéro de dépôt: **83400736.1**

(22) Date de dépôt: **13.04.83**

(54) Perfectionnements aux cellules optiques utilisant des cristaux liquides.

(30) Priorité: **28.04.82 FR 8207309**

(43) Date de publication de la demande:
**02.11.83 Bulletin 83/44**

(45) Mention de la délivrance du brevet:
**27.08.86 Bulletin 86/35**

(84) Etats contractants désignés:
**DE GB IT NL**

(56) Documents cités:
**DD - A - 117 013**

**APPLIED PHYSICS, vol. 11, no. 1, septembre 1976, pages 67-74, Springer-Verlag 1976, Heidelberg, DE., K. FAHRENSCHON et al.: "Deformation of a pretilted nematic liquid crystal layer in an electric field"**
**JOURNAL OF APPLIED PHYSICS, vol. 47, no. 9, septembre 1976, pages 3842-3845, American Institute of Physics, New York, USA, S. MATSUMOTO et al.: "Field-induced deformation of hybrid-aligned nematic liquid crystals: New multicolor liquid crystal display"**

(73) Titulaire: **CENTRE NATIONAL DE LA RECHERCHE SCIENTIFIQUE (CNRS), 15, Quai Anatole France, F-75007 Paris (FR)**

(72) Inventeur: **Durand, Georges, 16 rue de Chateaufort, F-91400 Orsay (FR)**
Inventeur: **Martinot-Lagarde, Philippe, 29 ter av. Massonat Deroches, F-91406 Marcoussis (FR)**
Inventeur: **Dozov, Ivan Laboratoires de Physique des Solides, Bâtiment 510 Université Paris Sud, F-91405 Orsay (FR)**

(74) Mandataire: **Martin, Jean-Jacques et al, Cabinet REGIMBEAU 26, Avenue Kléber, F-75116 Paris (FR)**

## Description

La présente invention concerne les dispositifs optiques utilisant des cristaux liquides, et se rapporte plus particulièrement à des perfectionnements aux cellules optiques utilisant des cristaux liquides en phase nématique, qui provoquent une rotation de la polarisation d'une lumière les traversant.

D'une façon générale, les cristaux liquides sont constitués de substances organiques qui présentent à la fois les caractéristiques d'un liquide et celles d'un solide cristallin, un tel étant de la matière, intermédiaire entre le solide et le liquide, étant appelé «mésomorphe».

Plus précisément, les cristaux liquides en phase nématique sont classés en deux grandes catégories dites «calamitique» et «discotique».

Les cristaux liquides nématiques calamitiques sont formés de molécules alongées dont les grands axes sont tous alignés dans une seule et même direction. Les centres de gravité des molécules sont répartis au hasard, comme dans un liquide ordinaire, et les molécules peuvent se déplacer, tous les mouvements des molécules les unes par rapport aux autres, ou sur elle-mêmes étant permis, à condition que l'alignement unidirectionnel soit conservé.

Il résulte de cette orientation uniaxiale, que les cristaux liquides nématiques calamitiques présentent toujours une anisotropie optique positive, une anisotropie diamagnétique positive, ainsi qu'une anisotropie diélectrique soit positive, soit négative, en fonction du composé considéré.

Les cristaux liquides nématiques discotiques sont eux formés de disques dont les axes sont tous alignés dans une seule et même direction. Là encore les centres de gravité des molécules sont répartis au hasard, comme dans un liquide ordinaire, et les molécules peuvent se déplacer, tous les mouvements des molécules les unes par rapport aux autres, ou sur elles-mêmes étant permis, à condition que l'alignement unidirectionnel des axes soit conservé.

Il résulte de cette orientation uniaxiale des axes perpendiculaires au plan des disques que les cristaux liquides nématiques discotiques présentent une anisotropie optique négative, une anisotropie diamagnétique négative, ainsi qu'une anisotropie diélectrique soit positive, soit négative, en fonction du composé considéré.

Les recherches intensives qui ont été conduites ces dernières années sur les cristaux liquides nématiques, et en particulier sur les cristaux liquides nématiques calamitiques, ont permis de mettre en évidence trois grands modes d'excitation électrique pour ceux-ci: la diffusion dynamique, l'alignement par un champ électrique utilisant l'effet de biréfringence contrôlée, et l'effet de nématique en hélice.

Dans les trois cas, la cellule optique de base est constituée d'une couche de cristal liquide nématique enserrée entre deux plaques de verre transparentes, parallèles, distantes de quelques dizaines de microns, voire quelques centaines de microns et munies d'électrodes transparentes sur leur face interne, c'est-à-dire la face orientée du côté de la couche de cristal liquide.

L'analyse succincte de ces trois cas qui va suivre se rapporte à ces couches de cristal liquide nématique calamitique.

On constate lorsqu'on observe une telle cellule, qu'en l'absence de tension appliquée entre les électrodes, le cristal liquide est parfaitement transparent, puisque ordonné, et donc invisible. Par contre, l'application d'un champ électrique par mise sous tension desdites électrodes rend ce milieu fortement diffusant et donc visible. Le champ électrique provoque un déséquilibre de l'arrangement moléculaire et une intense turbulence, et par là la diffusion de la lumière.

Le second mode d'excitation qui consiste à agir électriquement sur la biréfringence du produit en contrôlant cette action relève d'un principe tout-à-fait différent de celui de la diffusion dynamique. Lorsqu'on applique entre les électrodes précitées de la cellule une tension alternative de fréquence de l'ordre de 5 kHz, supérieure à la fréquence de relaxation des charges du cristal liquide, il se produit du fait de l'anisotropie diélectrique de ce dernier une variation dans la direction d'alignement des molécules. Sur ce point, il convient de noter que pour les cristaux liquides nématiques à anisotropie diélectrique positive, la constante diélectrique dans le sens de l'axe des molécules étant supérieure à la constante diélectrique perpendiculairement à cet axe, les molécules ont tendance à s'orienter parallèlement au champ électrique, tandis que dans le cas d'un cristal liquide à anisotropie diélectrique négative, les molécules ont plutôt tendance à s'orienter perpendiculairement au champ électrique. Pour cette raison, en présence de cristal liquide à anisotropie diélectrique positive, il convient d'assurer, lors du remplissage de la cellule un ancrage des molécules parallèlement aux parois, tandis qu'en présence de cristal liquide à anisotropie diélectrique négative, il est nécessaire que les molécules soient unitialement perpendiculaires aux plaques. La cellule optique étant alors placée entre un polariseur et un analyseur, et éclairée en lumière blanche, on constate que la transmission de la lumière blanche devient fortement chromatique et, en faisant varier la tension on peut modifier la couleur apparente de la cellule.

Dans le troisième mode d'excitation, mettant en œuvre l'effet de nématique en hélice, on s'arrange pour que, au départ, les directions préférentielles d'ancrage sur les deux plaques, tout en étant parallèles aux plaques, soient non parallèles entre elles, de telle sorte que l'on distord l'arrangement des molécules qui se placent en hélice. Pour ce faire, on définit initialement une direction préférentielle d'ancrage sur chacune des surfaces des plaques orientées du côté du cristal liquide, puis l'ancrage sur les parois étant ainsi contrôlé, on fait pivoter mécaniquement l'une des plaques par rapport à l'autre de telle sorte que les deux directions d'ancrage fassent entre elles un angle donné de préférence égal à 90°, la structure de la matière définissant alors un arrangement régulier en hélice. Cette dernière, en raison de l'anisotropie des molécules, est susceptible de faire tourner de 90° le plan de polarisation de la lumière qui la traverse. Par contre dès que l'on détruit l'hélice, en orientant les molécules perpendiculairement aux plaques par application d'une tension de quelques volts aux bornes de la cellule, on supprime toute rotation du plan de polarisation de la lumière. Par conséquent, si la cellule est là encore disposée entre un polariseur et un analyseur, selon la position relative de ces derniers (croisée ou non) et l'état de la cellule (application d'un champ électrique ou non) on peut autoriser le passage de la lumière ou non. La commande matricielle étant possible, on peut utiliser ce phénomène pour réaliser des écrans comportant une pluralité de caractères. Toutefois, chacune des cellules élémentaires commutant d'un état à l'autre et fonctionnant par conséquent pratiquement en «tout ou rien», on comprend que les applications de l'effet de nématique en hélice soit limitées.

Il ressort de l'analyse qui précède que les procédés de mise en œuvre antérieurement proposés pour les dispositifs à cristaux liquides sont à la fois complexes et difficiles à exécuter et à contrôler. En particulier, il convient de noter que dans la grande majorité des cas, les effets obtenus grâce auxdits procédés antérieurs d'une part ne sont pas linéaires en fonction de la commande appliquée, d'autre part présentent des seuils. Pour toutes ces raisons les applications des cristaux liquides dans le domaine de l'industrie sont restées très restreintes. En fait l'application des cristaux liquides est pratiquement limitée au domaine de l'affichage, en particulier pour les appareils portatifs, domaine dans lequel les afficheurs à cristaux liquides sont devenus de sérieux concurrents pour les afficheurs à diodes électroluminescentes en raison notamment des faibles niveaux de tension et de courant qu'ils requièrent, ce qui permet par exemple d'augmenter très sensiblement la durée de vie des piles et de réaliser un affichage permanent.

Le document «Applied Physics» 11 (1976) pages 67–74 décrit un procédé électrooptique de modulation de la polarisation de la lumière à l'aide de cristaux liquides, selon lequel:
a) on dispose une matière qui comprend des molécules douées de propriétés nématiques entre deux plaques transparentes parallèles,
b) on confère à toute ladite matière une structure définissant un directeur nématique (n) courbé au moins une fois dans un plan (x0z) perpendiculaire auxdites plaques et orienté exclusivement dans ce plan, tel que le directeur nématique (n) arrive sensiblement perpendiculairement à l'une au moins des deux plaques, et
c) on fait passer de la lumière arrivant avec une incidence sensiblement normale à l'une des plaques, à travers la matière.

On appelle directeur nématique le vecteur unitaire représentatif de la direction préférentielle d'alignement des molécules.

La présente invention vient maintenant proposer un nouveau procédé électrooptique de modulation de la polarisation de la lumière qui permet d'assurer en particulier une variation continue et linéaire de la polarisation de la lumière traversant la cellule.

Plus précisément, la présente invention propose un procédé électrooptique de modulation de la polarisation de la lumière à l'aide de cristaux liquides selon lequel
a) on dispose une matière qui comprend des molécules douées de propriétés nématiques entre deux plaques transparentes parallèles,
b) on confère à toute ladite matière une structure définissant un directeur nématique (n) courbé au moins une fois dans un plan (x0z) perpendiculaire auxdites plaques et orienté exclusivement dans ce plan, tel que le directeur nématique (n) arrive sensiblement perpendiculairement à l'une au moins des deux plaques,
c) on fait passer de la lumière arrivant avec une incidence sensiblement normale à l'une des plaques à travers la matière, caractérisé par le fait qu'il comprend aussi l'étape suivante:
d) provoquer une torsion variable du directeur nématique (n) de façon à l'amener dans une position pour laquelle il présente une composante normale audit plan (x0z) perpendiculaire aux plaques, la rotation de la polarisation de la lumière, en sortie, étant fonction de la torsion imposée au directeur nématique.

Comme cela apparaîtra à la lecture de la suite de la description, le procédé conforme à la présente invention présente de nombreux avantages par rapport aux procédés antérieurement existants. Un des principaux avantages et dû au fait que ce procédé permet aisément d'assurer une variation continue et linéaire de la polarisation de la lumière traversant la cellule alors que dans le cas de l'effet de nématique en hélice la commande n'était pas continue mais en «tout ou rien». D'autre part, il convient de remarquer que le directeur nématique arrivant perpendiculairement à l'une au moins des plaques, il suffit de choisir celle-ci comme plaque de sortie de la cellule pour rendre la polarisation de la lumière en sortie de la cellule, totalement indépendante de l'orientation des molécules sur celle-ci. Une telle caractéristique ne pouvait en aucune façon être obtenue dans le cas de l'effet de nématique en hélice.

Selon une première variante de mise en œuvre, l'étape b) comprend l'application d'un traitement de surface sur l'une au moins des surfaces des plaques orientées du côté de ladite matière, et de préférence le traitement de surface comprend l'application d'un revêtement sur l'une au moins des surfaces des plaques orientées du côté de la matière.

Plus précisément, selon une variante préférentielle de mise en œuvre de la présente invention, le revêtement est formé d'alcool polyvinylique sur l'une des plaques et de silane sur l'autre, de façon à déterminer une orientation du directeur nématique planaire sur une plaque et perpendiculaire sur l'autre.

Selon une autre variante de mise en œuvre, l'étape a) comprend le remplissage de l'espace défini entre les deux plaques par une matière qui comprend des molécules douées de propriétés nématiques dont la structure définit initialement un directeur nématique sensiblement rectiligne perpendiculaire aux plaques, et l'étape b) comprend l'application sur la matière d'un champ électrique haute fréquence.

Par champ électrique haute fréquence, on entend un champ électrique dont la période est inférieure au temps de relaxation des charges de la matière. Par opposition, on appelle champ électrique basse fréquence, un champ électrique dont la période est supérieure au temps de relaxation des charges.

Plus précisément, lorsque ladite matière présente une anisotropie diélectrique négative, le champ électrique haute fréquence est appliqué sensiblement perpendiculairement aux plaques, tandis que lorsque ladite matière présente une anisotropie diélectrique positive, le champ électrique haute fréquence est appliqué sensiblement parallèlement aux plaques.

Selon une troisième variante de mise en œuvre, l'étape a) comprend le remplissage de l'espace défini entre les deux plaques par une matière qui comprend des molécules douées de propriétés nématiques dont la structure définit initialement un directeur nématique sensiblement rectiligne perpendiculaire aux plaques et l'étape b) comprend l'application sur la matière d'un champ magnétique d'orientation parallèle aux plaques pour des cristaux liquides nématiques calamitiques, et perpendiculaire aux plaques pour des cristaux liquides nématiques discotiques.

Selon une première variante de mise en œuvre, l'étape d) comprend l'application sur la matière d'un champ électrique continu ou basse fréquence ayant une composante normale audit plan perpendiculaire aux plaques.

Selon une variante de mise en œuvre de la présente invention, l'étape d) comprend en outre l'application sur la matière d'un champ électrique haute fréquence d'orientation sensiblement parallèle aux plaques, ledit champ électrique haute fréquence étant normal audit plan perpendiculaire aux plaques, lorsque la matière présente une anisotropie diélectrique positive, alors que le champ électrique haute fréquence est parallèle au plan perpendiculaire aux plaques lorsque la matière présente une anisotropie diélectrique négative.

Selon une autre variante de mise en œuvre de la présente invention, l'étape d) comprend en outre l'application sur la matière d'un champ magnétique sensiblement parallèle aux plaques et plus précisément d'un champ magnétique normal audit plan perpendiculaire aux plaques pour des cristaux liquides nématiques calamitiques, et parallèle audit plan perpendiculaire aux plaques pour des cristaux liquides nématiques discotiques.

Selon une autre variante de mise en œuvre, l'étape d) du procédé comprend l'introduction dans la cellule d'une matière comprenant des molécules douées de propriétés cholestériques.

Les cristaux liquides en phase cholestérique sont constitués de molécules allongées, organisées en couches.

Les molécules sont parallèles entre elles à l'intérieur d'une même couche, mais en outre les différentes couches n'ont pas une position indifférente entre elles, les axes d'orientation des molécules dans les différentes couches s'organisant selon une structure hélicoïdale.

De façon à privilégier un domaine particulier de la structure, l'étape b) du procédé peut comprendre en outre l'application sur la matière d'un champ magnétique oblique par rapport auxdites plaques, et plus précisément d'orientation située dans ledit plan perpendiculaire aux plaques, défini par le directeur nématique, dans le cas de nématiques calamitiques.

Selon une variante, on peut privilégier un domaine particulier de la structure de ladite matière par application sur la cellule d'un champ électrique oblique par rapport auxdites plaques.

Le dispositif électrooptique à cristaux liquides conforme à la présente invention pour moduler la polarisation de la lumière est du type comprenant une cellule qui se compose de deux plaques transparentes parallèles entre lesquelles est disposée une matière qui comprend des molécules douées de propriétés nématiques, des moyens aptes à interagir avec une partie au moins des molécules, et des moyens d'orientation agencés pour conférer à toute ladite matière contenue entre les plaques une structure définissant un directeur nématique (n) courbé au moins une fois dans un plan (x0z) perpendiculaire auxdites plaques (1, 2) et orienté exclusivement dans ce plan, tels que le directeur nématique (n) arrive perpendiculairement à l'une au moins des deux plaques (1, 2), caractérisé par le fait qu'il comprend aussi des moyens de torsion (E) aptes à provoquer une torsion variable du directeur nématique (n) de façon à l'amener dans une position pour laquelle il présente une composante normale audit plan (x0z) perpendiculaire aux plaques (1, 2).

Selon une première variante de réalisation, les moyens d'orientation comprennent un traitement de surface sur une face au moins des plaques orientées vers ladite matière.

Plus précisément, les moyens d'orientation comprennent un revêtement déposé sur une face au moins des plaques orientées vers ladite matière. Plus précisément encore, selon un mode de réalisation préférentiel, lesdits revêtements sont constitués d'alcool polyvynilique sur l'une des plaques et de silane sur l'autre.

Selon une seconde variante de réalisation, les moyens d'orientation comprennent des moyens aptes à appliquer un champ électrique à la cellule optique.

Selon une troisième variante de réalisation, les moyens d'orientation comprennent des moyens aptes à appliquer un champ magnétique à la cellule.

Selon une première variante de réalisation des moyens de torsion, ceux-ci comportent des moyens aptes à appliquer un champ électrique continu ou basse fréquence à la cellule, parallèlement aux plaques.

Les moyens de torsion peuvent comporter en outre des moyens aptes à appliquer, parallèlement aux plaques de la cellule, un champ électrique haute fréquence ou un champ magnétique.

Selon un second mode de réalisation des moyens de torsion, ceux-ci comprennent une matière comprenant des molécules douées de propriétés cholestériques, mélangées à la matière comprenant des molécules douées de propriétés nématiques.

Le dispositif comprend en outre des moyens sensibles à la polarisation de la lumière qui entre dans la cellule et des moyens pour examiner les variations de la polarisation de la lumière traversant la cellule.

Les caractéristiques et avantages de la présente invention apparaîtront mieux à la lecture de la description détaillée qui va suivre, et en regard des dessins annexés donnés à titre d'exemples non limitatifs, qui doivent être considérés comme incorporés à la description par la référence qui leur est faite ici, et sur lesquels:

– la fig. 1 représente une vue schématique en perspective d'une cellule optique à cristaux liquides conforme à la présente invention,

– la fig. 2 représente une vue schématique partielle en perspective d'une cellule optique à cristaux liquides conforme à la présente invention, et illustre un concept de base de celle-ci,

– la fig. 3 représente une vue schématique en coupe d'une cellule optique à cristaux liquides conforme à la présente invention, selon un plan de coupe perpendiculaire aux plaques et illustre plus précisément l'étape consistant à privilégier un domaine particulier de l'arrangement moléculaire,

– la fig. 4 illustre une courbe représentative de l'amplitude de l'angle $\Phi_0$ de rotation du plan de polarisation relevé sur une cellule conforme à la figure 1 en fonction de l'amplitude du champ électrique E appliqué,

– la fig. 5 représente une vue schématique en perspective d'une cellule optique à cristaux liquides conforme à la présente invention, et illustre plus précisément une variante de la structure conférée à la matière par l'étape b) du procédé,

– la fig. 6 illustre une courbe représentative de l'amplitude de l'angle de rotation $\Phi$ relevé lors d'une variante de mise en œuvre du procédé.

La description détaillée qui va suivre s'applique plus particulièrement aux cristaux liquides nématiques calamitiques.

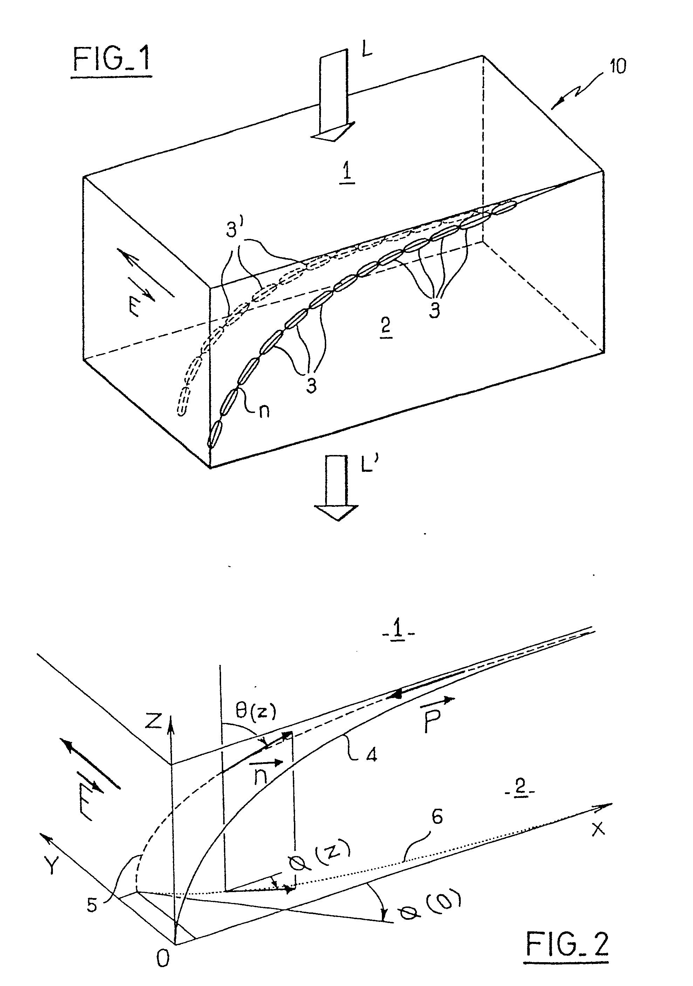

Comme cela est représenté schématiquement sur la figure 1, la cellule optique élémentaire 10 se compose de façon classique en soi de deux plaques transparentes parallèles 1 et 2, par exemple en verre, entre lesquelles est insérée une matière comprenant des molécules douées de propriétés nématiques. Sur la figure 1 on a schématiquement représenté la matière sous forme de molécules allongées référencées 3. Bien entendu, la totalité de l'espace situé entre les plaques 1 et 2 doit être rempli, mais pour simplifier la représentation on n'a reproduit qu'un seul et unique alignement de molécules 3 dont les dimensions ne sont pas en rapport avec les dimensions de la cellule.

Bien entendu, ladite matière 3 est maintenue entre les deux plaques 1 et 2 de la cellule 10 par une pièce annulaire (non représentée sur la figure 1) qui joue également le rôle de pièce d'écartement. De préférence cette pièce annulaire sera réalisée en un matériau électriquement isolant.

Pour la bonne compréhension de la suite de la présente description, on définira maintenant, comme cela est représenté sur la figure 2, un repère orthonormé dont l'origine est référencée 0 et située sur la plaque 2, et les axes 0x et 0y sont orthogonaux entre eux et parallèles aux plaques 1 et 2, tandis que l'axe 0z est perpendiculaire à celles-ci.

La cellule 10 comporte en outre des moyens dits d'orientation (non représentés sur les figures 1 et 2 et qui seront décrits plus en détail dans la suite de la présente description) aptes à conférer à la matière une structure définissant un directeur nématique n courbé au moins une fois dans un plan perpendiculaire aux plaques 1 et 2 (en l'occurence le plan x0z), tels que le directeur nématique n arrive sensiblement perpendiculairement à l'une au moins des deux plaques, à savoir la plaque 2 selon le mode de réalisation représenté sur les figures 1 et 2. Comme cela a été précédemment indiqué, on appelle directeur nématique n, le vecteur unitaire représentatif de la direction préférentielle d'alignement des molécules. De préférence, on réalise un ancrage fort sur les parois de la cellule.

On appelle $\theta$ (z) et $\Phi$ (z) les angles formés d'une part entre le directeur nématique n et l'axe 0z perpendiculaire aux plaques 1 et 2 et, d'autre part entre la projection du directeur nématique n sur le plan x0y et la direction d'alignement des molécules sur la plaque 1, à savoir l'axe 0x.

La cellule 10 comporte également des moyens dits de torsion (qui seront décrits plus en détail dans la suite de la présente description) aptes à provoquer une torsion du directeur nématique n selon une composante normale audit plan x0z perpendiculaire aux plaques 1 et 2, plan x0z qui est défini par le directeur nématique n sous l'action des moyens d'orientation. En l'occurrence, ledit plan perpendiculaire aux plaques 1 et 2 coïncidant avec le plan x0z, les moyens de torsion tendent à tordre le directeur nématique n selon l'axe 0y. La position des molécules lors de l'application desdits moyens de torsion est schématiquement représentée en traits interrompus sur la figure 1 sous la référence 3'.

Si donc on envoie sur une face dite d'entrée (plaque 1) de la cellule 10 ainsi formée et selon une incidence normale à cette plaque d'entrée, de la lumière (schématiquement représentée sur la figure 1 par la flèche référencée L) polarisée linéairement, dont le plan de polarisation correspond à l'alignement des molécules situées au voisinage de la plaque 1 d'entrée, la Demanderesse a observé que le plan de polarisation de la lumière L' qui traverse la cellule 10 tourne d'un angle $\Phi_o$ égal à la torsion imposée par lesdits moyens de torsion au directeur nématique n.

La rotation du plan de polarisation de la lumière L est due à l'effet de guide d'ondes optique joué par les molécules composant la matière 3 enserrée entre les deux plaques 1 et 2.

En modifiant l'action des moyens de torsion, on module directement l'angle de rotation ($\Phi_o$) de la polarisation de la lumière L.

On va décrire maintenant plus en détail le mode de réalisation représenté schématiquement sur la figure 1.

Selon le mode de réalisation représenté sur la figure 1, les moyens d'orientation comprennent des traitements de surface consistant à appliquer des revêtements sur l'une au moins des faces des plaques 1 et 2 orientées vers ladite matière.

Selon un mode de réalisation particulier les revêtements sont formés d'alcool polyvynilique sur l'une des plaques 1 et de silane sur l'autre 2. De tels revêtements définissent comme cela est représenté sur la figure 1, une orientation des molécules et donc du directeur nématique (n), planaire sur la première plaque (1), c'est-à-dire parallèle à celle-ci, et homéotrope sur la seconde (2), c'est-à-dire perpendiculaire à cette dernière.

Bien entendu, de nombreux modes de réalisation des traitements de surface pourrant être retenus, la nature des revêtements précités n'étant donnée qu'à titre non limitatif. De même le traitement de surface peut être réalisé non point sous forme de revêtement de l'une au moins des surfaces des plaques 1 et 2, mais par frottis préalable de celles-ci, voire même des électrodes les recouvrant, comme cela sera décrit plus en détail dans la suite de la présente description, par exemple au moyen d'un tissu de papier fin. Un tel frottis qui peut être réalisé sur un revêtement préalable a pour but de déterminer la direction préférentielle d'alignement des molécules (en l'occurence selon l'axe 0x).

Il résulte de la distorsion «mécanique» imposée dans la couche de cristal liquide nématique (3) par le traitement de surface, lors du remplissage de la cellule, une courbure du directeur nématique n dans un plan (x0z) perpendiculaire aux plaques 1 et 2. La courbure du directeur nématique n a été schématiquement représentée par le trait plein référencé 4 sur la figure 2. Cette courbure du directeur nématique n induit une polarisation en volume flexoélectrique P. Ce phénomène a été mis en évidence par Meyer R.B. et décrit dans la publication Phys. Rev. Lett. 22 (1969) 918.

En fait, on sait maintenant que la constante flexoélectrique e est d'origine quadrupolaire électrique. En ne retenant que l'effet de volume qui ne se ramène pas à la surface, on démontre que la polarisation en volume flexoélectrique P, proportionnelle à e*/d, est parallèle à l'axe 0x, c'est-à-dire audit plan (x0z) perpendiculaire aux plaques 1 et 2 et localisée au voisinage de la plaque 1 comme cela est schématiquement représenté sur la flèche référencée $\vec{P}$ sur la figure 2.

On définit d comme étant la distance entre les deux plaques parallèles 1 et 2 et e* la composante «anisotropique» de la constante flexoélectrique, $e^* = e_1 - e_3$ où $e_1$ représente la composante de la constante flexoélectrique dûe à la divergence et $e_3$ la composante de la constante flexoélectrique e dûe à la courbure proprement dite.

En fait $\vec{P} = e^* \, \vec{n} \, \mathrm{div} \, \vec{n}$.

Si donc on applique à l'aide de deux électrodes parallèles non représentées sur la figure 1, mais qui peuvent être assimilées à la paroi la plus avant et à la paroi la plus arrière de la cellule 10, parallèles au plan x0z, un champ électrique E continu ou basse fréquence orienté selon l'axe 0y, parallèle aux plaques et perpendiculaire à la direction du vecteur $\vec{P}$ représentant la polarisation en volume flexoélectrique, on crée un couple proportionnel au champ électrique E appliqué, qui s'équilibre avec un couple élastique proportionnel à

$$\frac{K}{d^2} \Phi_o,$$

où K est la constante de courbure de la matière, $\Phi_o$ l'angle azimutal de torsion maximum et d la distance entre les deux plaques, on observe donc une torsion constante de la structure de la matière 3 par rapport à la direction d'alignement sur la plaque 1, qui est schématiquement représentée en traits interrompus sur la figure 1. On appelle champ électrique basse fréquence, un champ électrique dont la période est supérieure au temps de relaxation des charges. Plus précisément l'angle azimutal de torsion maximum $\Phi_o$ correspond à l'angle $\Phi$ (z) existant entre l'axe 0x (orientation des molécules sur la plaque 1) et la tangente dans le plan x0y à la projection, sur ce même plan, du directeur nématique défini par les molécules proches de la plaque 2. A l'équilibre on obtient un angle $\Phi_o$ directement proportionnel à la valeur du champ électrique E appliqué. En d'autres termes l'angle $\Phi_o$ est linéaire en champ E.

L'orientation du directeur nématique n obtenue à la suite de l'application du champ électrique E a été schématiquement représentée sur la figure 2 sous forme d'une ligne en traits interrompus référencée 5; la projection de cette dernière sur le plan x0y étant représentée en pointillé et référencée 6.

En fait, on démontre si l'on considère que l'angle θ

$$\left(\theta = \frac{\pi z}{2d}\right)$$

n'est pas modifié par l'application du champ électrique E selon l'axe 0y que:

$$\Phi_o - \frac{e^* E d.}{\pi K}$$

Dans un tel cas, le régime en guide d'onde imposant que $\Delta np$ soit supérieur à $\lambda$ (ou $\Delta n$ représente la biréfringence apparente du cristal liquide nématique, p représente le pas de la structure tordue et $\lambda$ la longueur d'onde de la lumière traversant la cellule), c'est-à-dire $\theta$ supérieur à

$$\frac{\lambda e^* E}{3 K}$$

qui est de l'ordre de

$$\frac{\lambda \Phi_o,}{d}$$

l'erreur relative sur la valeur $\Phi_o$ est de l'ordre de

$$\frac{\lambda^2 \Phi_o.}{d^2}$$

Comme cela sera expliqué plus en détail dans la suite de la description, en régime linéaire, $\Phi_o$ sera toujours inférieur à un radian, par conséquent on peut assimiler une cellule 10 ayant une épaisseur d supérieure à la longueur d'onde $\lambda$ de la lumière la traversant, à un élément se comportant en guide d'onde optique sur la totalité de son épaisseur et on peut considérer que le plan de polarisation de la lumière traversant la cellule subit une rotation d'un angle $\Phi_o$.

Si l'on envoie sur la face 1 de la cellule ainsi formée, et selon une incidence normale à cette plaque 1, de la lumière L polarisée linéairement, dont le plan de polarisation correspond à la direction d'alignement des molécules 3' sur cette plaque 1, on constate que la lumière polarisée L' ressort de la face 2 en ayant tourné d'un angle $\Phi_o$.

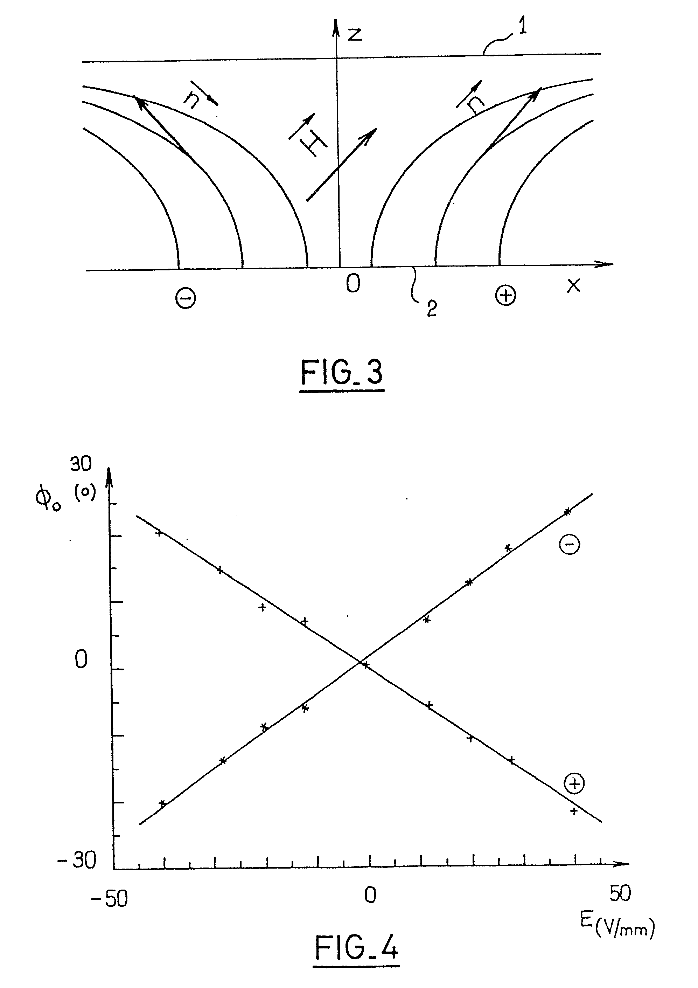

Comme cela est schématiquement représenté sur la figure 3, qui représente une vue en coupe de la cellule, selon un plan de coupe parallèle au plan x0z, lorsqu'on introduit le cristal liquide nématique (3) à l'intérieur de l'espace défini entre les deux plaques 1 et 2, celles-ci ayant préalablement subi les traitements appropriés, la structure de la matière peut définir deux domaines (représentés de part et d'autre de l'axe 0z sur la figure 3 et référencés + et −) dont les directeurs nématiques $\vec{n}$ sont courbés dans un même plan (x0z) perpendiculaire aux plaques 1 et 2, mais selon des sens opposés.

Pour uniformiser la structure de la matière 3 enserrée entre les deux plaques 1 et 2, il convient de privilégier l'un des domaines précités. Ceci peut être réalisé simplement par application d'un champ magnétique H, même provisoire, schématiquement représenté sur la figure 2, oblique par rapport auxdites plaques 1 et 2, dont l'orientation est située dans ledit plan (x0z) perpendiculaire aux plaques 1 et 2. On sait en effet que les molécules pour des cristaux liquides nématiques calamitiques ont tendance à s'aligner parallèlement aux lignes du champ magnétique. En l'occurence, selon le mode de réalisation représenté sur la figure 3, le domaine (+) représenté sur la droite de l'axe 0z aura tendance à croître, tandis que le domaine (−) de courbure opposée représenté sur la gauche de l'axe 0z aura tendance à disparaître en raison de l'application du champ magnétique H précité.

De façon similaire, on peut privilégier l'un des domaines (+ ou −) en appliquant un champ électrique sur la cellule 10. Le sens du champ électrique doit être déterminé en fonction du signe de l'anisotropie diélectrique de la matière (3). En effet, comme cela a déjà été indiqué, dans le cas d'un cristal liquide présentant une anisotropie diélectrique positive, les molécules ont tendance à s'orienter parallèlement au champ électrique, tandis que dans le cas d'un cristal liquide présentant une anisotropie diélectrique négative, les molécules ont plutôt tendance à s'orienter perpendiculairement au champ électrique.

On va maintenant décrire un exemple particulier de mise en œuvre d'une cellule 10 conforme au mode de réalisation représenté sur la figure 1.

Exemple 1

Un premier essai a été réalisé sur une cellule optique remplie d'un cristal liquide nématique dans les conditions suivantes:

– nature du cristal liquide (3) : MBBA (METOXYBENZYLIDENE BUTYLANILINE),
– les plaques de verre 1 et 2 sont recouvertes respectivement d'une pellicule d'alcool polyvynilique (plaque 1) et de silane (plaque 2),
– distance entre le deux plaques de verre: 40 μm,
– un domaine de la structure a été privilégié par application d'un champ magnétique oblique sur les plaques,
– température ambiante: 20°C.

La cellule ainsi remplie étant insérée entre un polariseur (du côté de la plaque 1) qui polarise la lumière L dans la direction de l'alignement des molécules sur la plaque 1, et un analyseur (du côté de la plaque 2), on observe une rotation du plan de polarisation de la lumière L' en sortie de la cellule 10, linéaire en fonction du champ électrique E appliqué sur celle-ci selon l'axe 0y, à l'aide de deux électrodes non représentées sur la figure 1. Pour un angle de rotation de ±30°, le champ électrique E était de l'ordre de ± 50 V/mm.

Le polariseur et l'analyseur n'ont pas été représentés sur les figures.

Le polariseur étant disposé du côté de la plaque 1 sur laquelle l'orientation des molécules 3' est fixe, on comprend qu'il suffit de pivoter l'analyseur pour observer les variations de rotation du plan de polarisation de la lumière L' ayant traversé la cellule. D'autre part le directeur nématique n arrivant perpendiculairement à la plaque 2, l'orientation des molécules sur cette plaque n'intervient pas sur l'orientation du plan de polarisation de la lumière en sortie de la cellule.

Comme cela est représenté sur la figure 4 qui illustre la variation de l'angle de rotation $\Phi_0$ du plan de polarisation de la lumière (porté en ordonnée) en fonction du champ électrique E appliqué à la cellule (porté en abscisse), pour un domaine donné lorsque l'on inverse le sens du champ électrique E, on inverse le sens de rotation. De même lorsqu'on inverse la courbure du directeur nématique n de la structure, c'est-à-dire lorsque l'on passe d'un premier domaine (+) à un second domaine (–) de courbure opposée, par application d'un champ magnétique oblique sur les plaques et orthogonal au champ magnétique généré pour privilégier le premier domaine, on observe comme cela est représenté sur la figure 4, que les courbes relevées sur chacun des deux domaines sont rigoureusement symétriques.

Grâce à une telle cellule 10 on peut par conséquent aisément réaliser un système de commande de la rotation de la polarisation d'une lumière L qui la traverse, et donc moduler l'intensité du faisceau lumineux lorsque la cellule 20 est placée entre un polariseur et un analyseur. Il convient de remarquer que l'effet n'a pas de seuil.

L'intensité lumineuse du faisceau traversant la cellule sera maximale lorsque la matière fait tourner le plan de polarisation de telle sorte que celui-ci soit, en sortie, parallèle à la direction de l'analyseur, et par contre minimale (voire nulle si l'échantillon de cristal liquide est parfait) si le plan de polarisation est incliné en sortie de 45° par rapport à l'analyseur.

Les essais réalisés ont montré que l'on peut aisément obtenir une rotation du plan de polarisation de la lumière entre –45°C et +45°C, voire –50°C et +50°C. Lorsque l'on tente de franchir ces valeurs par application d'un champ électrique d'amplitude élevée, on observe l'apparition d'instabilités électrohydrodynamiques, les effets en $E^2$ deviennent alors prépondérants.

Le temps de réponse $\tau$ de la cellule est typiquement celui d'un cristal liquide nématique, c'est-à-dire de l'ordre de 100 ms dans le cas de la cellule précitée. Le temps de réponse $\tau$ est proportionnel à

$$\frac{d^2\eta}{K}$$

où $\eta$ représente la viscosité du cristal liquide.

La Demanderesse a en outre observé que l'angle maximal $(\Phi_0)$ de rotation du plan de polarisation avait tendance à s'élever lorsque l'on augmentait d. Une telle augmentation de l'épaisseur de la cellule tend bien entendu à élever le temps de réponse de la cellule 10, cependant il est possible de diminuer celui-ci par application de champs stabilisants.

Exemple 2

Un second essai a été réalisé sur une cellule optique 10 remplie d'un cristal liquide nématique, dans les conditions suivantes:

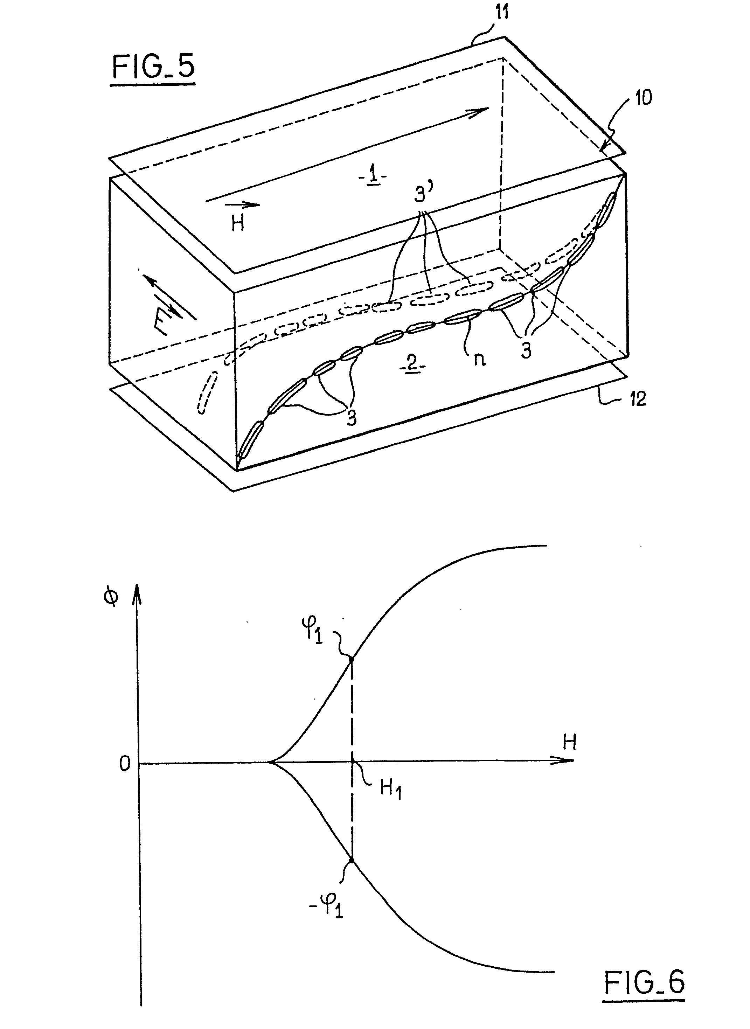

– nature du cristal liquide MBBA (METOXY-BENZYLIDENE BUTYLANILINE),
– distance entre les deux plaques de verre: de l'ordre de 40 $\mu$m,
– la structure du cristal liquide définit initialement un directeur nématique rectiligne perpendiculaire aux plaques,
– par application d'un champ magnétique d'orientation parallèle aux plaques on confère (étape b) à la matière (3) une structure définissant un directeur nématique n doublement courbé dans un plan perpendiculaire aux plaques (plan référencé x0z), tel que le directeur nématique n arrive perpendiculaire aux plaques 1 et 2 et soit sensiblement parallèle à celles-ci au milieu de la couche du cristal liquide, comme cela est représenté sur la figure 5.

L'intensité du champ magnétique doit être déterminée en fonction de chaque cas particulier et notamment de la nature du cristal liquide utilisé et de la distance d existant entre les deux plaques 1 et 2. Bien entendu plus l'intensité du champ magnétique est élevée, plus la courbure du directeur nématique n est prononcée, les molécules du cristal liquide tendant à s'orienter parallèlement au champ H. Cependant, la Demanderesse a constaté que si l'intensité du champ magnétique est trop élevée, celui-ci rigidifie la structure de la matière, il est alors difficile d'opérer la torsion de cette structure lors de l'étappe c du procédé. Là encore, on peut privilégier un domaine particulier de la structure par application d'un champ magnétique ou électrique approprié.

De plus, la cellule 10 ainsi remplie est introduite entre un polariseur et un analyseur schématiquement représentés en 11 et 12. Au repos, c'est-à-dire en l'absence de champ électrique E normal au plan x0z perpendiculaire aux plaques 1 et 2 contenant le directeur nématique n de la structure, le plan de polarisation de la lumière traversant la cellule n'est pas modifié. Ainsi donc si le polariseur 11 et l'analyseur 12 ont une orientation parallèle, et parallèle ou perpendiculaire audit plan x0z perpendiculaire aux plaques 1 et 2, imposé par le champ magnétique H, la cellule est transparente et laisse passer la lumière sans rotation de la polarisation.

Par contre, lors de l'application d'un champ électrique E continu ou basse fréquence parallèle aux plaques, et plus précisément perpendiculaire au plan x0z, analogue au champ E représenté sur les figures 1 et 2, on provoque une rotation de la polarisation de la lumière dûe au couple EP qui s'équilibre avec un couple élastique et qui tend à provoquer une torsion du directeur nématique n selon une composante normale audit plan x0z perpendiculaire aux plaques 1 et 2. On crée alors une portion d'hélice au centre de l'échantillon.

La rotation du plan de polarisation observée est alors double de celle observée dans le cas de l'exemple 1.

Pour laisser passer le maximum de lumière à travers la cellule 10 il est donc nécessaire de faire tourner le polariseur 11 d'un angle $+\Phi$ et l'analyseur 12 d'un angle $-\Phi$ par rapport au plan x0z per-

pendiculaire aux plaques 1 et 2 défini par le champ magnétique H.

La cellule décrite dans l'exemple 2 peut être utilisée pour réaliser un modulateur de lumière ou un rotateur de polarisation.

Selon une variante de mise en œuvre de cet exemple 2, le champ magnétique parallèle aux plaques 1 et 2 qui confère à la matière 3 une structure définissant un directeur nématique n doublement courbé dans un plan x0z perpendiculaire aux plaques peut être remplacé par un champ électrique haute fréquence, c'est-à-dire d'une période inférieure au temps de relaxation des charges de façon telle que les charges d'espace n'aient pas le temps d'apparaître. A titre indicatif la fréquence du champ électrique haute fréquence pourra être de l'ordre de 1kHz.

Dans le cas où la cellule 10 est remplie avec un cristal liquide présentant une anisotropie diélectrique négative, telle que le MBBA, le champ électrique haute fréquence doit être perpendiculaire aux plaques 1 et 2. Ainsi en partant d'une structure qui définit un directeur nématique n perpendiculaire aux plaques 1 et 2, on observe qu'avec un champ électrique haute fréquence perpendiculaire aux plaques 1 et 2, les molécules 3 situées au milieu de la couche tendent à se courber pour s'orienter perpendiculairement au champ électrique, donc parallèlement aux plaques 1 et 2 et définir ainsi un directeur nématique n doublement courbé dans un plan x0z perpendiculaire aux plaques 1 et 2.

Par contre, dans le cas où la cellule 10 est remplie avec un cristal liquide présentant une anisotropie diélectrique positive, les molécules ayant tendance à s'orienter parallèlement au champ électrique appliqué, il est nécessaire d'orienter le champ électrique haute fréquence parallèlement aux plaques 1 et 2 et au plan x0z choisi, de façon telle que la structure définisse un directeur nématique n doublement courbé dans un plan x0z perpendiculaire aux plaques 1 et 2.

Bien entendu les moyens aptes à appliquer soit un champ magnétique soit un champ électrique ne doivent pas occulter le faisceau lumineux.

En particulier lorsque l'on utilise un cristal liquide à anisotropie diélectrique négative, il est nécessaire de donner aux électrodes déposées sur chacune des plaques 1 et 2, soit des dimensions relativement faibles, soit encore de prévoir celles-ci transparentes. Ainsi selon une technique relativement classique dans le domaine, on peut prévoir de réaliser les électrodes à l'aide d'une couche conductrice d'oxyde de zinc, d'étain ou d'indium, transparente.

Dans la description qui précède l'étape c) du procédé conforme à la présente invention consiste à appliquer au cristal liquide nématique un champ électrique E continu ou basse fréquence parallèle aux plaques 1 et 2 de façon à provoquer une torsion du directeur nématique n selon une composante normale audit plan x0z perpendiculaire aux plaques 1 et 2.

On va maintenant décrire d'autres variantes de mise en œuvre de l'étape c) de ce procédé.

Exemple 3

Des essais ont été réalisés sur une cellule optique 10 conforme à la cellule définie dans l'exemple 2. Toutefois, au lieu d'appliquer à celle-ci un champ électrique E continu ou basse fréquence normal audit plan x0z perpendiculaire aux plaques 1 et 2, défini par le directeur nématique n, on applique initialement un champ magnétique de même orientation; on observe alors comme cela est schématiquement représenté sur la figure 6, une rotation du plan de polarisation de la lumière traversant la cellule perpendiculairement aux plaques, rotation dont l'amplitude dépend de l'amplitude du champ magnétique appliqué. Le phénomène est non linéaire et présente un seuil. On a représenté sur la figure 6 l'angle de rotation du plan de polarisation $\Phi$ en ordonnée et l'amplitude du champ magnétique H en abscisse.

La rotation du plan de polarisation peut aléatoirement être dirigée d'un côté ou de l'autre, ce qui explique la présence d'un seuil.

Toutefois, on peut privilégier un sens en appliquant initialement à la cellule 10 un champ électrique E continu ou basse fréquence, normal audit plan x0z perpendiculaire aux plaques 1 et 2. L'amplitude du champ électrique E continu ou basse fréquence peut être relativement faible puisque l'effet flexoélectrique observé dans le cadre des exemples 1 et 2 ne présente pas de seuil.

De façon similaire, si pour un champ magnétique d'amplitude $H_1$ l'angle de rotation du plan de polarisation de la lumière traversant la cellule est égal à $\varphi_1$, le sens de $\varphi_1$ étant accessoirement défini par application d'un champ électrique E continu ou basse fréquence, de sens approprié, par application d'un champ électrique E continu ou basse fréquence de sens opposé, présentant une amplitude suffisante, on peut inverser le sens de l'angle de rotation et passer de $+\varphi_1$ à $-\varphi_1$, et ainsi de suite. En d'autres termes on obtient un effet bistable dont la commande est constituée par l'application d'un champ électrique E continu ou basse fréquence d'amplitude et de sens appropriés.

Cette propriété peut être utilisée pour commuter un modulateur de lumière ou un rotateur de polarisation entre deux positions prédéterminées.

Bien entendu, l'orientation du champ magnétique précité est indépendante du sens de l'anisotropie diélectrique du cristal liquide nématique utilisé.

Selon une autre variante de mise en œuvre du procédé conforme à la présente invention, le champ magnétique destiné à provoquer une torsion du directeur nématique n selon une composante normale au plan x0z perpendiculaire aux plaques 1 et 2, peut être remplacé par un champ électrique haute fréquence parallèle aux plaques 1 et 2.

Dans le cas d'un cristal liquide présentant une anisotropie diélectrique positive, le champ électrique haute fréquence devra être orienté parallèlement au champ électrique continu ou basse fréquence, précité, c'est-à-dire normal audit plan x0z perpendiculaire aux plaques 1 et 2, puisque les molécules ont alors tendance à s'orienter parallèlement au champ électrique.

Par contre, dans le cas d'un cristal liquide présentant une anisotropie diélectrique négative, le champ électrique haute fréquence devrait, en théorie, être orienté parallèlement audit plan x0z perpendiculaire aux plaques 1 et 2 puisque les molécules ont alors tendance à s'orienter perpendiculairement au champ. Cette disposition impose de prévoir des champs électriques orthogonaux, ce qui conduit, pour des raisons technologiques, à préférer l'utilisation de champ magnétique pour des cristaux liquides à anisotropie diélectrique négative.

Bien entendu la matière contenue dans la cellule peut être formée soit d'une substance organique pure présentant les propriétés d'un cristal liquide nématique, soit d'un mélange de plusieurs substances organiques présentant les propriétés de cristaux liquides nématiques, soit encore d'un cristal liquide nématique et d'une autre substance organique chirale. Un des buts essentiels d'un tel mélange consiste à élever la constante flexoélectrique.

Ainsi, selon une variante de mise en œuvre du procédé conforme à la présente invention, les moyens de torsion aptes à tordre le directeur nématique comprennent une substance organique présentant les propriétés d'un cristal liquide cholestérique.

En effet, l'expérience a montré qu'en procédant au mélange d'une substance nématique avec une substance cholestérique, cette dernière transmet ses propriétés à l'ensemble de la phase nématique.

L'orientation hélicoïdale des divers plans des substances cholestériques donne lieu par conséquent à l'apparition d'un directeur nématique n tordu.

Un tel moyen peut être utilisé par exemple pour produire une rotation initiale du plan de polarisation de la lumière, la rotation étant ensuite modulée soit dans le sens de l'augmentation soit dans le sens de la diminution à l'aide des moyens précités et notamment d'un champ électrique E continu ou basse fréquence.

En variante, les moyens de torsion peuvent comprendre exclusivement des substances cholestériques. La cellule dans un tel cas peut être utilisée pour réaliser des dosages de substances chirales par détermination de l'angle de rotation du plan de polarisation de la lumière traversant la cellule, qui est lui-même fonction de la quantité de substance cholestériques contenues dans la cellule.

Selon une autre variante, les moyens de torsion peuvent comprendre en combinaison des substances cholestériques et des moyens aptes à privilégier, dans des zones différentes de la cellule, des structures définissant respectivement des directeurs nématiques tordus dans des sens opposés, une telle cellule pouvant être utilisée par exemple pour séparer des composés racémiques.

Bien entendu la présente invention n'est pas limitée aux modes de réalisation qui viennent d'être décrits à partir desquels on pourra prévoir de nombreuses variantes de réalisation sans pour autant sortir du cadre de la présente invention.

Ainsi, on peut réaliser une commande matricielle de la rotation de la polarisation de la lumière traversant la cellule en prévoyant une pluralité d'électrodes, aptes à générer le champ électrique E continu ou basse fréquence, sur les plaques 1 et 2, voire dans le volume même de la matière.

On peut aussi utiliser un champ stabilisant avec une (ou des) contreélectrode(s) sur l'une des plaques et une matrice d'électrodes sur l'autre plaque.

A titre indicatif, pour des électrodes distantes de 10 μm, la tension à appliquer entre les électrodes est de l'ordre de 1,5 V pour un angle de rotation du plan de polarisation voisin de ± 45°.

La cellule conforme à la présente invention peut également être utilisée pour détecter ou mesurer un écoulement. Dans un tel cas, il suffit d'adapter la cellule de façon telle que ledit écoulement constitue des moyens dits de torsion et tordre le directeur nématique n. Il suffit alors d'examiner la rotation du plan de polarisation de la lumière induite lors de la traversée de la cellule.

D'autre part bien que la description qui précède se soit attachée essentiellement au cas des cristaux liquides nématiques calamitiques, la présente invention sera aisément étendue à l'utilisation de cristaux liquides nématiques discotiques pour lesquels le directeur nématique n correspond au vecteur unitaire représentatif de la direction préférentielle d'alignement des axes des disques. Bien entendu sur le plan pratique, l'anisotropie diamagnétique des cristaux liquides nématiques discotiques étant négative, l'orientation du champ magnétique devra être modifiée en conséquence. De même, là encore, l'orientation du champ électrique devra être déterminée en fonction du signe de l'anisotropie diélectrique de la matière choisie.

**Revendications**

1. Procédé électrooptique de modulation de la polarisation de la lumière à l'aide de cristaux liquides selon lequel
a) on dispose une matière qui comprend des molécules douées de propriétés nématiques entre deux plaques transparentes parallèles,
b) on confère à toute ladite matière une structure définissant un directeur nématique (n) courbé au moins une fois dans un plan (x0z) perpendiculaire auxdites plaques (1, 2) et orienté exclusivement dans ce plan, tel que le directeur nématique (n) arrive sensiblement perpendiculairement à l'une au moins des deux plaques,
c) on fait passer de la lumière arrivant avec une incidence sensiblement normale à l'une des plaques (1, 2), à travers la matière, caractérisé par le fait qu'il comprend aussi l'étape consistant

d) à provoquer une torsion variable du directeur nématique (n) de façon à l'amener dans une position pour laquelle il présente une composante normale audit plan (x0z) perpendiculaire aux plaques, la rotation de la polarisation de la lumière, en sortie, étant fonction de la torsion imposée au directeur nématique.

2. Procédé selon la revendication 1, caractérisé par le fait que l'étape b) comprend l'application d'un traitement de surface sur l'une au moins des surfaces des plaques (1, 2) orientées du côté de ladite matière (figure 1).

3. Procédé selon la revendication 2, caractérisé par le fait que le traitement de surface comprend l'application d'un revêtement sur l'une au moins des surfaces des plaques (1, 2) orientées du côté de ladite matière.

4. Procédé selon la revendication 3, caractérisé par le fait que le traitement de surface comprend l'application d'un revêtement apte à déterminer une orientation du directeur nématique planaire sur une plaque (1) et perpendiculaire sur l'autre (2).

5. Procédé selon la revendication 1, caractérisé par le fait que l'étape a) comprend le remplissage de l'espace défini entre les deux plaques (1, 2) par une matière qui comprend des molécules douées de propriétés nématiques dont la structure définit initialement un directeur nématique (n) sensiblement rectiligne perpendiculaire aux plaques (1, 2), et que l'étape b) comprend l'application sur la matière d'un champ électrique haute fréquence (figure 5).

6. Procédé selon la revendication 5, caractérisé par le fait que ladite matière présente une anisotropie diélectrique négative et que le champ électrique haute fréquence est sensiblement perpendiculaire aux plaques (1, 2).

7. Procédé selon la revendication 5, caractérisé par le fait que ladite matière présente une anisotropie diélectrique positive et que le champ électrique haute fréquence est sensiblement parallèle aux plaques (1, 2).

8. Procédé selon la revendication 1, caractérisé par le fait que l'étape a) comprend le remplissage de l'espace défini entre les deux plaques (1, 2) par une matière qui comprend des molécules douées de propriétés nématiques dont la structure définit initialement un directeur nématique (n) sensiblement rectiligne perpendiculaire aux plaques (1, 2) et que l'étape b) comprend l'application sur la matière d'un champ magnétique (figure 5).

9. Procédé selon l'une des revendications 1 à 8, caractérisé par le fait que l'étape d) comprend l'application sur la matière d'un champ électrique (E) continu ou basse fréquence ayant une composante normale audit plan (x0z) perpendiculaire aux plaques (1, 2).

10. Procédé selon l'une des revendications 1 à 5 et 8 à 9, caractérisé par le fait que l'étape d) comprend l'application sur la matière d'un champ électrique haute fréquence d'orientation sensiblement parallèle aux plaques (1, 2).

11. Procédé selon la revendication 10, caractérisé par le fait que ladite matière présente une anisotropie diélectrique positive et que le champ électrique haute fréquence est sensiblement normal audit plan (x0z) perpendiculaire aux plaques (1, 2).

12. Procédé selon la revendication 10, caractérisé par le fait que ladite matière présente une anisotropie diélectrique négative et que le champ électrique haute fréquence est sensiblement parallèle audit plan (x0z) perpendiculaire aux plaques (1, 2).

13. Procédé selon l'une des revendications 1 à 5 et 8 à 9, caractérisé par le fait que l'étape d) comprend l'application sur la matière d'un champ magnétique sensiblement parallèle aux plaques (1, 2).

14. Procédé selon la revendication 13, caractérisé par le fait que ladite matière présente une anisotropie diélectrique positive.

15. Procédé selon la revendication 13, caractérisé par le fait que ladite matière présente une anisotropie diélectrique négative.

16. Procédé selon l'une des revendications 1 à 9, caractérisé par le fait que l'étape d) comprend l'introduction dans la cellule d'une matière comprenant des molécules douées de propriétés cholestériques.

17. Procédé selon l'une des revendications 1 à 16, caractérisé par le fait que l'étape b) comprend en outre l'application sur la matière d'un champ magnétique (H) oblique par rapport auxdites plaques (1, 2) de façon à privilégier un domaine particulier de la structure (figure 3).

18. Procédé selon l'une des revendications 1 à 16, caractérisé par le fait que l'étape b) comprend en outre l'application sur la matière d'un champ électrique oblique par rapport auxdites plaques (1, 2) de façon à privilégier un domaine particulier de la structure de ladite matière.

19. Dispositif électrooptique à cristaux liquides pour moduler la polarisation de la lumière du type comprenant une cellule qui se compose de deux plaques transparentes parallèles entre lesquelles est disposée une matière qui comprend des molécules douées de propriétés nématiques, des moyens aptes à interagir avec une partie au moins des molécules, et des moyens d'orientation agencés pour conférer à toute ladite matière contenue entre les plaques une structure définissant un directeur nématique (n) courbé au moins une fois dans un plan (x0z) perpendiculaire auxdites plaques (1, 2) et orienté exclusivement dans ce plan, tels que le directeur nématique (n) arrive perpendiculairement à l'une au moins des deux plaques (1, 2), caractérisé par le fait qu'il comprend aussi des moyens de torsion (E) aptes à provoquer une torsion variable du directeur nématique (n) de façon à l'amener dans une position pour laquelle il présente une composante normale audit plan (x0z) perpendiculaire aux plaques (1, 2).

20. Dispositif selon la revendication 19, caractérisé par le fait que les moyens d'orientation comprennent un traitement de surface sur une face au moins des plaques (1, 2) orientée vers ladite matière.

21. Dispositif selon la revendication 20, caractérisé par le fait que les moyens d'orientation comprennent un revêtement déposé sur une face au moins des plaques (1, 2), orientée vers ladite matière.

22. Dispositif selon la revendication 19, caractérisé par le fait que les moyens d'orientation comprennent des moyens aptes à appliquer un champ électrique.

23. Dispositif selon la revendication 19, caractérisé par le fait que les moyens d'orientation comprennent des moyens aptes à appliquer un champ magnétique.

24. Dispositif selon l'une des revendications 19 à 23, caractérisé par le fait que les moyens de torsion comprennent des moyens aptes à appliquer un champ électrique (E) parallèlement aux plaques (1, 2).

25. Dispositif selon l'une des revendications 19 à 24, caractérisé par le fait que les moyens de torsion comprennent des moyens aptes à appliquer un champ magnétique parallèlement aux plaques (1, 2).

26. Dispositif selon l'une des revendications 19 à 25, caractérisé par le fait qu'il comprend des moyens sensibles à la polarisation de la lumière qui entre dans la cellule et des moyens pour examiner les variations de la polarisation de la lumière traversant la cellule.

**Patentansprüche**

1. Elektrooptisches Verfahren zur Modulation der Polarisation von Licht mittels Flüssigkristallen, bei dem
a) man ein Material, welches mit nematischen Eigenschaften ausgestattete Moleküle umfasst, zwischen zwei parallelen, transparenten Platten anordnet,
b) man dem gesamten Material eine Struktur verleiht, die eine nematische Leitlinie (n) bestimmt, die wenigstens einmal in einer zu den Platten (1, 2) senkrechten Ebene (x0z) gekrümmt und ausschliesslich in dieser Ebene orientiert ist, derart, dass die nematische Leitlinie (n) im wesentlichen senkrecht bei wenigstens einer der zwei Platten ankommt,
c) man einfallendes Licht mit im wesentlichen zu der einen der Platten (1, 2) normalen Eintritt durch das Material hindurchgehen lässt, dadurch gekennzeichnet, dass es auch den Schritt umfasst
d) eine veränderbare Torsion der nematischen Leitlinie (n) derart hervorzurufen, dass sie in eine Lage geführt wird, bei der sie eine zu der zu den Platten senkrechten Ebene (x0z) normale Komponente aufweist, wobei die Drehung der Polarisation des Lichtes beim Austritt eine Funktion der der nematischen Leitlinie aufgeprägten Torsion ist.

2. Verfahren nach Anspruch 1, dadurch gekennzeichnet, dass der Schritt b) die Anwendung einer Oberflächenbehandlung bei wenigstens einer der Oberflächen der Platten (1, 2) umfasst, die zu der Seite des Materials ausgerichtet sind. (Fig. 1).

3. Verfahren nach Anspruch 2, dadurch gekennzeichnet, dass die Oberflächenbehandlung die Anwendung eines Überzuges auf wenigstens einer der Oberflächen der Platten (1, 2) umfasst, die zu der Seite des Materials ausgerichtet sind.

4. Verfahren nach Anspruch 3, dadurch gekennzeichnet, dass die Oberflächenbehandlung die Anwendung eines Überzuges umfasst, mit dem eine zu einer Platte (1) planare und eine zu der anderen (2) senkrechte Orientierung der nematischen Leitlinie bestimmbar ist.

5. Verfahren nach Anspruch 1, dadurch gekennzeichnet, dass der Schritt a) umfasst, den zwischen den zwei Platten (1, 2) festgelegten Raum mit einem Material zu füllen, das mit nematischen Eigenschaften ausgestattete Moleküle umfasst, deren Struktur anfangs eine im wesentlichen geradlinige, zu den Platten (1, 2) senkrechte, nematische Leitlinie (n) festlegt und dass der Schritt b) das Anlegen eines elektrischen Hochfrequenzfeldes an das Material umfasst (Fig. 5).

6. Verfahren nach Anspruch 5, dadurch gekennzeichnet, dass das Material eine dielektrische, negative Anisotropie aufweist und dass das elektrische Hochfrequenzfeld im wesentlichen senkrecht zu den Platten (1, 2) ist.

7. Verfahren nach Anspruch 5, dadurch gekennzeichnet, dass das Material eine dielektrische, positive Anisotropie aufweist und dass das elektrische Hochfrequenzfeld im wesentlichen parallel zu den Platten (1, 2) ist.

8. Verfahren nach Anspruch 1, dadurch gekennzeichnet, dass der Schritt a) umfasst, den zwischen den zwei Platten (1, 2) festgelegten Raum mit einem Material zu füllen, welches mit nematischen Eigenschaften ausgestattete Moleküle umfasst, deren Struktur anfangs eine im wesentlichen geradlinige, zu den Platten (1, 2) senkrechte, nematische Leitlinie (n) festlegt, und dass der Schritt b) das Anlegen eines Magnetfeldes an das Material umfasst (Fig. 5).

9. Verfahren nach einem der Ansprüche 1 bis 8, dadurch gekennzeichnet, dass der Schritt d) das Anwenden eines elektrischen Gleichfeldes (E) oder eines Niederfrequenzfeldes auf das Material umfasst, welches eine zu der zu den Platten (1, 2) senkrechten Ebene (x0z) normale Komponente besitzt.

10. Verfahren nach einem der Ansprüche 1 bis 5 oder 8 bis 9, dadurch gekennzeichnet, dass der Schritt d) das Anwenden eines elektrischen Hochfrequenzfeldes mit im wesentlichen zu den Platten (1, 2) paralleler Ausrichtung auf das Material umfasst.

11. Verfahren nach Anspruch 10, dadurch gekennzeichnet, dass das Material eine dielektrische, positive Anisotropie aufweist und dass das elektrische Hochfrequenzfeld im wesentlichen normal zu der zu den Platten (1, 2) senkrechten Ebene (x0z) verläuft.

12. Verfahren nach Anspruch 10, dadurch gekennzeichnet, dass das Material eine dielektrische, negative Anisotropie aufweist und dass das elektrische Hochfrequenzfeld im wesentlichen parallel zu der zu den Platten (1, 2) senkrechten Ebene (x0z) verläuft.

13. Verfahren nach einem der Ansprüche 1 bis 5 oder 8 bis 9, dadurch gekennzeichnet, dass der Schritt d) das Anwenden eines im wesentlichen zu den Platten (1, 2) parallelen Magnetfeldes auf das Material umfasst.

14. Verfahren nach Anspruch 13, dadurch gekennzeichnet, dass das Material eine dielektrische positive Anisotropie aufweist.

15. Verfahren nach Anspruch 13, dadurch gekennzeichnet, dass das Material eine dielektrische, negative Anisotropie aufweist.

16. Verfahren nach einem der Ansprüche 1 bis 9, dadurch gekennzeichnet, dass der Schritt d) das Einbringen von einem Material in die Zelle umfasst, welches mit cholesterischen Eigenschaften ausgestattete Moleküle umfasst.

17. Verfahren nach einem der Ansprüche 1 bis 16, dadurch gekennzeichnet, dass der Schritt b) ferner das Anwenden eines in bezug auf die Platten (1, 2) schrägen Magnetfeldes (H) auf das Material umfasst, derart, dass eine besondere Domäne der Struktur bevorzugt wird (Fig. 3).

18. Verfahren nach einem der Ansprüche 1 bis 16, dadurch gekennzeichnet, dass der Schritt b) ferner das Anwenden eines in Bezug auf die Platten (1, 2) schrägen, elektrischen Feldes auf das Material umfasst derart, dass eine besondere Domäne der Struktur des Materials bevorzugt wird.

19. Elektrooptische Flüssigkristallvorrichtung zur Modulation der Polarisation des Lichtes von der Art, welche umfasst eine Zelle, die aus zwei transparenten, parallelen Platten besteht, zwischen denen ein Material angeordnet ist, welches mit nematischen Eigenschaften ausgestattete Moleküle umfasst, mit Mitteln, die zum Wechselwirken mit wenigstens einem Teil der Moleküle geeignet sind, und Ausrichtmitteln, um dem gesamten, zwischen den Platten enthaltenen Material eine Struktur zu verleihen, die eine nematische Leitlinie (n) festlegt, die wenigstens einmal in einer zu den Platten (1, 2) senkrechten Ebene (x0z) gekrümmt und ausschliesslich in dieser Ebene ausgerichtet ist, derart, dass die nematische Leitlinie (n) auf wenigstens einer der zwei Platten (1, 2) senkrecht ankommt, dadurch gekennzeichnet, dass die Vorrichtung auch Torsionsmittel (E) umfasst, mit denen eine veränderbare Torsion der nematischen Leitlinie (n) hervorrufbar ist, derart, dass sie in eine Position führbar ist, in der sie eine zu der zu den Platten (1, 2) senkrechten Ebene (x0z) normale Komponente aufweist.

20. Vorrichtung nach Anspruch 19, dadurch gekennzeichnet, dass die Ausrichtmittel eine Oberflächenbehandlung auf wenigstens einer der Seiten der Platten (1, 2) umfasst, die zu dem Material weisen.

21. Vorrichtung nach Anspruch 20, dadurch gekennzeichnet, dass die Ausrichtmittel einen auf wenigstens einer Seite der Platten (1, 2) aufgebrachten Überzug umfassen, die zu dem Material weist.

22. Vorrichtung nach Anspruch 19, dadurch gekennzeichnet, dass die Ausrichtmittel Mittel umfassen, mit denen ein elektrisches Feld anwendbar ist.

23. Vorrichtung nach Anspruch 19, dadurch gekennzeichnet, dass die Ausrichtmittel Mittel umfassen, mit denen ein Magnetfeld anwendbar ist.

24. Vorrichtung nach einem der Ansprüche 19 bis 23, dadurch gekennzeichnet, dass die Torsionsmittel Mittel umfassen, mit denen ein elektrisches Feld (E) parallel zu den Platten (1, 2) anwendbar ist.

25. Vorrichtung nach einem der Ansprüche 19 bis 24, dadurch gekennzeichnet, dass die Torsionsmittel Mittel umfassen, mit denen ein Magnetfeld parallel zu den Platten (1, 2) anwendbar ist.

26. Vorrichtung nach einem der Ansprüche 19 bis 25, dadurch gekennzeichnet, dass sie Mittel umfasst, die für die Polarisation des Lichtes empfindlich sind, welches in die Zelle eintritt, sowie Mittel, um die Änderung der Polarisation des die Zelle durchlaufenden Lichtes zu beobachten.

## Claims

1. An electro-optical process for modulation of the polarisation of light by means of liquid crystals according to which
a) a substance which contains molecules possessing nematic properties is arranged between two parallel transparent plates,
b) all of said substance is given a structure defining a nematic director (n) which is curved at least once in a plane (x0z) perpendicular to said plates (1, 2) and oriented exclusively in this plane such that the nematic director (n) arrives substantially perpendicularly at at least one of the two plates,
c) the light arriving with an angle of incidence substantially normal to one of the plates (1, 2) is passed through the substance, characterized by the fact that it also comprises the stage involving
d) causing variable torsion of the nematic director (n) so as to bring it into a position in which it has a component which is normal to said plane (x0z) perpendicular to the plates, the rotation of the polarisation of the light at the output consequently being a function of the torsion imposed on the nematic director.

2. A process according to claim 1, characterized in that the stage b) comprises the application of a surface treatment on at least one of the surfaces of the plates (1, 2) orientated on the side of said substance (Figure 1).

3. A process according to claim 2, characterized in that the surface treatment comprises the application of a coating on at least one of the surfaces of the plates (1, 2) orientated on the side of said substance.

4. A process according to claim 3, characterized in that the surface treatment comprises the

13

application of a coating capable of determining an orientation of the nematic director which is planar on one plate (1) and perpendicular on the other (2).

5. A process according to claim 1, characterized in that the stage a) comprises filling the space defined between the two plates (1, 2) by a substance comprising molecules possessing nematic properties of which the structure initially defines a substantially rectilinear nematic director (n) perpendicular to the plates (1, 2), and in that the stage b) comprises the application of a high frequency electrical field to the substance (Figure 5).

6. A process according to claim 5, characterized in that said substance has negative dielectric anisotropy and that the high frequency electric field is substantially perpendicular to the plates (1, 2).

7. A process according to claim 5, characterized in that said substance has positive dielectric anisotropy and in that the high frequency electric field is substantially parallel to the plates (1, 2).

8. A process according to claim 1, characterized in that the stage a) comprises filling the space defined between the two plates (1, 2) with a substance containing molecules possessing nematic properties of which the structure initially defines a substantially rectilinear nematic director (n) perpendicular to the plates (1, 2) and in that stage b) comprises the application of a magnetic field to the substance (Figure 5).

9. A process according to one of claims 1 to 8, characterized in that the stage d) comprises the application to the substance of a continuous or low frequency electric field (E) having a component normal to said plane (x0z) perpendicular to the plates (1, 2).

10. A process according to one of claims 1 to 5 and 8 to 9, characterized in that stage d) comprises the application to the substance of a high frequency electric field having an orientation substantially parallel to the plates (1, 2).

11. A process according to claim 10, characterized in that said substance has positive dielectric anisotropy and in that the high frequency electric field is substantially normal to said plane (x0z) perpendicular to the plates (1, 2).

12. A process according to claim 10, characterized in that said substance has negative dielectric anisotropy and that the high frequency electric field is substantially parallel to said plane (x0z) perpendicular to the plates (1, 2).

13. A process according to one of claims 1 to 5 and 8 to 9, characterized in that the stage d) comprises the application of a magnetic field substantially parallel to the plates (1, 2) to the substance.

14. A process according to claim 13, characterized in that said substance has positive dielectric anisotropy.

15. A process according to claim 13, characterized in that said substance has negative dielectric anisotropy.

16. A process according to one of claims 1 to 9, characterized in that stage d) comprises the introduction into the cell of a substance comprising molecules possessing cholesteric properties.

17. A process according to one of claims 1 to 16, characterized in that stage b) also comprises the application to the substance of a magnetic field (H) which is oblique to said plates (1, 2) so as to favour a particular area of the structure (Figure 3).

18. A process according to one of claims 1 to 16, characterized in that stage b) also comprises the application to the substance of an electric field which is oblique to said plates (1, 2) so as to favour a particular area of the structure of said substance.

19. An electro-optical device with liquid crystals for modulating the polarisation of the light of the type comprising a cell composed of two parallel transparent plates between which there is arranged a substance which comprises molecules possessing nematic properties, means capable of interacting with at least a proportion of the molecules and means of orientation which are arranged so as to impart to all said substance contained between the plates a structure defining a nematic director (n) which is curved at least once in a plane (x0z) perpendicular to said plates (1, 2) and oriented exclusively in this plane such that the nematic director (n) arrives perpendicularly to at least one of the two plates (1, 2), characterized in that it also comprises means of torsion (E) capable of causing variable torsion of the nematic director (n) so as to bring it into a position in which it has a component normal to said plane (x0z) perpendicular to the plates (1, 2).

20. A device according to claim 19, characterized in that the means of orientation comprise a surface treatment on at least one face of the plates (1, 2) orientated towards said substance.

21. A device according to claim 20, characterized in that the means of orientation comprise a coating deposited on at least one face of the plates (1, 2) orientated towards said subtance.

22. A device according to claim 19, characterized in that the means of orientation comprise means capable of applying an electric field.

23. A device according to claim 19, characterized in that the means of orientation comprise means capable of applying a magnetic field.

24. A device according to one of claims 19 to 23, characterized in that the means of torsion comprise means capable of applying an electric field (E) parallel to the plates (1, 2).

25. A device according to one of claims 19 to 24, characterized in that the means of torsion comprise means capable of applying a magnetic field parallel to the plates (1, 2).

26. A device according to one of claims 19 to 25, characterized in that it comprises means which are sensitive to the polarisation of the light entering the cell and means for examining the variations in the polarisation of the light traversing the cell.

FIG_1

FIG_2

FIG_3

FIG_4

0 093 035

## FIG_5

## FIG_6

19